(19) **Europäisches Patentamt**

**European Patent Office**

**Office européen des brevets**

(11) **EP 0 992 193 B1**

(12) **EUROPEAN PATENT SPECIFICATION**

(45) Date of publication and mention
of the grant of the patent:
**23.06.2004 Bulletin 2004/26**

(51) Int Cl.[7]: **A21D 2/26**, A21D 13/06,
A21D 8/02

(21) Application number: **99303207.7**

(22) Date of filing: **26.04.1999**

(54) **Process for making bread with addition of a gliadin-rich fraction, without incorporation of yeast food and emulsifier**

Verfahren zur Brotherstellung unter Zugabe von einer gliadinreichen Fraktion, ohne Zugabe von Hefenahrung und Emulgator

Procédé de fabrication de pain avec addition d'une fraction riche en gliadine, sans incorporation de nourriture pour levure ni d'émulsifiant

(84) Designated Contracting States:
**DE GB**

(30) Priority: **06.10.1998 JP 29913198**

(43) Date of publication of application:
**12.04.2000 Bulletin 2000/15**

(73) Proprietor: **Asama Chemical Co., Ltd.**
**Tokyo (JP)**

(72) Inventors:
• **Yajima, Mizuo, c/o Asama Chemical Co., Ltd.**
**Tokyo (JP)**
• **Katahira, Ryouta**
**Tokyo (JP)**

(74) Representative: **W.P. THOMPSON & CO.**
**Eastcheap House**
**Central Approach**
**Letchworth Garden City,**
**Hertfordshire SG6 3DS (GB)**

(56) References cited:
| | |
|---|---|
| **EP-A- 0 005 977** | **EP-A- 0 298 419** |
| **EP-A- 0 685 164** | **DE-A- 2 831 729** |
| **DE-A- 4 427 668** | **FR-A- 2 234 739** |
| **US-A- 3 897 568** | **US-A- 4 645 831** |
| **US-A- 5 458 902** | |

## EP 0 992 193 B1

**Description**

BACKGROUND TO THE INVENTION

The present invention relates to a method for making bread.

Bread made from rich materials, for example, dairy products such as butter and eggs has been recognized as a high-grade one. However, consumers' values have changed with the times toward bread comprising lean preparation and keeping the natural taste of wheat. Besides, there is a tendency to dislike bread containing synthetic additives such as emulsifiers and yeast food, while to value bread made from natural materials only.

Methods of making dough for bread generally employed in Japan are the straight dough method and the sponge dough method. The former is suitable for making bread on a small scale; the latter is suitable for making bread on a large scale. In particular, for making bread on a large scale, yeast food, emulsifiers and shortening are mostly used in order to supplement the stability of the bread product. Such yeast food and emulsifiers however cause degradation of the taste and flavor of bread. Oils and fats such as shortening can give a taste of themselves but cause loss of the taste of wheat. Without those materials, however, bread cannot be stably made on a large scale.

That is to say, by the usual sponge dough method, which is superior in stability in large-scale production, it is almost impossible to make bread without yeast food, emulsifiers and shortening. Besides, it is very hard to make bread without shortening with a view to decreasing calories.

On the other hand, making bread without using yeast food, emulsifiers and shortening by the straight dough method, is also unsuitable for large-scale production because it needs highly experienced techniques, special apparatus, a long fermentation time at a low temperature and so on.

In short, it is very difficult to make bread keeping the original taste of wheat, or to make bread without additives such as yeast food and emulsifiers by a conventional method suitable for mass production.

SUMMARY OF THE INVENTION

It is an object of the present invention to provide a method for making bread suitable for mass production, which enables bread to be made without additives such as yeast food and emulsifiers.

It is another object of the present invention to provide a method for making bread suitable for mass production, which enables bread to be made with the original taste of wheat kept.

After extensively investigating to attain the above objects, the present inventors found that a gliadine-rich fraction which is extracted and separated from wheat and preferably contains at least 55 wt.% of gliadine in the protein, more preferably at least 60 wt.%, has a function usable in place of emulsifiers, shortening and yeast food without spoiling the original taste of wheat by using the fraction alone or with a protein hydrolysate.

Thus, the present invention is to provide a method for making bread, wherein a gliadine-rich fraction is used alone or with a protein hydrolysate in place of yeast food and emulsifiers. The present invention is also to provide a method for making bread, wherein a gliadine-rich fraction is used alone or with a protein hydrolysate in place of emulsifiers, shortening and yeast food.

The invention provides a process for making bread, comprising the steps of mixing flour, yeast, optional additives, water and a gliadine-rich fraction, without incorporation of yeast food and emulsifier, to prepare dough, and baking it. The gliadine-rich fraction is prepared as an extract product of wheat gluten with an aqueous, acidic solution of ethanol or an aqueous acidic liquid. The gliadine-rich fraction is incorporated into a dough in an amount of 0.5 to 15 wt.% of the flow. The dough may further include salt, sugar, milk product, improvers, etc. Bread may be made by kneading a preparation, yeasting it and baking it. It may be made by any conventional method.

The inventive process can save incorporation of shortening by using the gliadine-rich fraction.

A hydrolysate product of protein may be further incorporated into the dough. The hydrolysate product of protein preferably includes at least 30 wt.% and more preferably at least 50 wt.% or 30 wt.% to 80 wt.% of amino acids. Alternatively, the hydrolysate product includes 30 wt.% to 80 wt% of amino acids.

The protein hydrolysate is preferably used in an amount of 0.02 to 0.1 wt.% based on the flour.

The dough is preferably a lean preparation.

The gliadine-rich fraction may be an extract of gluten with an organic acid and include 60 wt.% or more of gliadine in the protein.

In a process for making bread, the invention provides an improvement comprising adding a gliadine-rich fraction, without incorporation of yeast food and emulsifier, to dough. In other words, it provides an improvement comprising using a gliadine-rich fraction in place of incorporation of yeast food and emulsifier. Alternatively it provides use of a gliadine-rich fraction, in place of incorporation of yeast food and emulsifier, for making bread.

## DETAILED DESCRIPTION OF THE INVENTION

In the present invention, the gliadine-rich fraction may be any one extracted and separated from gluten contained in wheat flour. Methods of separating the gluten are not limited. For instance, the method of separating the gluten, which is a material for fractionation, includes a typical separation by making dough. The separated gluten may be any of wet gluten as it was separated, and active powder gluten dried with a flash drier, a spray drier or the like. The dry gluten is preferable.

The method of dividing the gliadine-rich fraction is the acid ethanol aqueous solution extraction method or the acid aqueous solution extraction method. The acid ethanol aqueous solution extraction method is, for example, a method of extracting from wheat gluten with a 1 to 20 vol.%-ethanol aqueous solution containing 0.01 to 5.0 wt./vol.% of at least one organic acid selected from the group consisting of citric acid, lactic acid, malic acid and acetic acid. The acid aqueous solution extraction method is, for example, a method of extracting with an aqueous solution of pH4.5 or less, containing 0.1 to 10 wt./vol.% of at least one organic acid selected from the group consisting of citric acid, lactic acid, malic acid, acetic acid and phosphoric acid, and salts thereof.

The gliadine-rich fraction of the present invention preferably contains 55 wt.% or more of gliadine in the protein 60 wt.% or more is more preferable.

In the present invention, the addition method of the gliadine-rich fraction to bread is not limited. As for the added quantity, the fraction can begin to operate at 0.5 wt.% based on the wheat flour. At 1 wt.%, similar bread can be obtained without yeast food and emulsifiers. At 2 wt.% or more, similar bread can be obtained without yeast food, emulsifiers and, further, shortening.

The addition method of the fraction includes the method of mixing with wheat flour in advance, the method of dispersing in kneading water, and the method of adding at kneading. The method of mixing with wheat flour in advance is preferable.

Protein hydrolysate of the present invention may be any one which can hydrolyze animal protein, vegetable albumin, yeast or the like, and which contains amino acid of 30 wt.% or more. A powdery one containing amino acid of 50 wt.% or more is preferable.

The addition method and the added quantity of the protein hydrolysate are not limited. It is desirable that the added quantity of protein hydrolysate powder containing 50 wt.% of amino acid is 0.1 to 0.02 wt.% based on the flour in order not to influence the taste of bread. The preferred addition method is to mix it with wheat flour.

Use of the gliadine-rich fraction together with the protein hydrolysate is effective in the case of making bread without adding saccharides.

In the method for making bread according to the present invention, methods of making dough are not limited. For instance, the method for making dough includes the straight dough method, the sponge dough method and the pre-ferment process. The sponge dough method is preferable.

In the present invention, examples of yeast food include inorganic salts such as calcium, magnesium, potassium, sodium and ammonium, which are nutrients for yeast, and chemicals prepared by blending such inorganic salts with at least one of oxidizing agents such as potassium bromate and L-ascorbic acid, and ferment agents such as amylase, protease and lipoxygenase. The emulsifiers include glycerol fatty acid ester, sorbitan fatty acid ester, sucrose fatty acid ester, lecithin, calcium stearate lactate (C.S.L), sodium stearate lactate (N.S.L) or the like. The shortening includes oils and fats containing hydrogenated oils and fats, mixtures thereof, emulsifiers and so on, and artificially given plasticity. It does not include natural oils and fats such as lard and butter.

In the present invention, the kind of bread is not limited. Examples of the bread include lean prepared bread such as English bread, French bread or rich prepared buns. The lean prepared bread is preferable. Lean preparation basically consists of wheat flour, yeast, salt and water. It may further include, for example, a little quantity of sugar, oils and fats. The lean preparation according to the present invention consists of, e.g., wheat flour, yeast, salt, water, 5 wt.% or less based on the flour of saccharides, 1 wt.% or less based on the flour of oils and fats. A part or all of the flour may be replaced with whole wheat, rye flour, Graham or the like.

According to the present invention, tasty bread can be made without using yeast food and emulsifiers otherwise essential for a method of mass-production of bread.

## EXAMPLES

Hereinafter, examples of the present invention will be described. In these examples, "%" is meant as wt.% unless mentioned not.

Example 1 and Comparative Example 1

Flour was prepared by mixing 0.1 kg of GLIA-A (trade name, manufactured by Asama Chemical Co., Ltd.; a powder product containing 60% or more of gliadine in the protein, which is obtained by extracting from wheat gluten with an organic acid) with 9.9 kg of strong flour. This flour was divided into 7 kg and 3 kg to make a loaf of open top bread (English bread) by the sponge dough method under the following conditions. Another loaf of English bread was made in a similar manner with 10 kg of wheat flour only (Comparative Example 1).

| Making conditions (70% sponge dough method) | | Ex. 1 | Com. Ex. 1 |
|---|---|---|---|
| Sponge dough | Flour | 7 kg | 7 kg |
| | Raw yeast | 200 g | 200 g |
| | Water | 4.55 kg | 4.55 kg |
| | Kneading conditions | L 2 min. | H 1 min. |
| | Kneading-up temperature | 24°C | 24°C |
| | Primary fermentation | 4 hrs. | 4 hrs. |
| Main dough | Flour | 3 kg | 3 kg |
| | Salt | 200 g | 200 g |
| | Sugar | 500 g | 500 g |
| | Water | 1.95 kg | 1.95 kg |
| | Kneading conditions | L 3 min. | H 6 min. |
| | Kneading-up temperature | 28°C | 28°C |
| | Floor time | 15 min. | |
| | Division, molder | 220 g × 2 | |
| | Bench time | 20 min. | |
| Final fermentation (Proof) | | Temperature 36°C, Humidity 90%, For 50 min. | |
| | Baking | For 30 min. at 220°C | |

Physical properties of the obtained bread were measured. Results are shown in Table 1. As apparent from Table 1, the bread of Comparative Example 1 was of lesser volume and its aging was rapid, so it was inferior. On the contrary, the bread of Example 1 was soft, its aging was slow, and it was of greater volume. It kept the taste of wheat, and was delicious with lasting sweetness.

Table 1

| | | Ex. 1 | Com. Ex. 1 |
|---|---|---|---|
| Baking shrinkage | | 13% | 12.5% |
| Specific volume | | 5.12 | 4.31 |
| Crumb hardness (after baking) | 2 hrs. | 77 g | 92 g |
| | 24 hrs. | 140 g | 165 g |
| | 48 hrs. | 178 g | 247 g |
| | 72 hrs. | 207 g | 298 g |

The baking shrinkage, specific volume and crumb hardness were measured and calculated by the following methods.

Baking shrinkage (%) =

{(dough weight - dough weight after baking)/dough weight} x 100

Specific volume = volume of bread/weight of bread

Crumb hardness; cut bread into pieces having a thickness of 2 cm, then measure with a rheometer the number of grams required for pushing a disk of a diameter of 2 cm into the piece of bread by 1 cm.

Example 2 and Comparative Example 2

Flour was prepared by mixing 0.2 kg of GLIA-A with 9.8 kg of strong flour. This flour was divided into 7 kg and 3 kg to make a loaf of English bread by the sponge dough method under the following conditions. Another loaf of English bread was made in a similar manner with 10 kg of wheat flour only (Comparative Example 2).

| Making conditions (70% sponge dough method) | | Ex. 2 | Com. Ex. 2 |
|---|---|---|---|
| Sponge dough | Flour | 7 kg | 7 kg |
| | Instant yeast | 100 g | 100 g |
| | Water | 4.34 kg | 4.34 kg |
| | Kneading conditions | L 2 min. | H 1 min. |
| | Kneading-up temperature | 24°C | 24°C |
| | Primary fermentation | 4 hrs. | 4 hrs. |
| Main dough | Flour | 3 kg | 3 kg |
| | Salt | 200 g | 200 g |
| | Sugar | 300 g | 300 g |
| | Water | 1.86 kg | 1.86 kg |
| | Kneading conditions | L 3 min. | H 6 min. |
| | Kneading-up temperature | 28°C | 28°C |
| | Floor time | 15 min. | |
| | Division, molder | 220 g × 2 | |
| | Bench time | 20 min. | |
| | Final fermentation | Ttemperature 36°C, Humidity 90%, For 50 min. | |
| | Baking | For 30 min. at 220°C | |

Physical properties of the obtained bread were measured. Results are shown in Table 2. As apparent from Table 2, the bread of Comparative Example 2 was of lesser volume and its aging was rapid, so it was inferior. On the contrary, the bread of Example 2 was soft, its aging was slow, and it was of greater volume. It kept the taste of wheat, and was delicious with a lasting salty taste.

Table 2

| | | Ex. 2 | Com. Ex. 2 |
|---|---|---|---|
| Baking shrinkage | | 14% | 14% |
| Specific volume | | 4.95 | 3.96 |
| Crumb hardness (after baking) | 2 hrs. | 95 g | 140 g |
| | 24 hrs. | 168 g | 236 g |
| | 48 hrs. | 227 g | 348 g |
| | 72 hrs. | 369 g | 456 g |

EP 0 992 193 B1

Example 3 and Comparative Example 3

Flour was prepared by mixing 0.3 kg of GLIA-A with 9.7 kg of wheat flour for French bread. This flour was divided into 7 kg and 3 kg to make a loaf of English bread by the sponge dough method under the following conditions. Another loaf of English bread was made in a similar manner with 10 kg of wheat flour only (Comparative Example 3).

| Making conditions (70% sponge dough method) | Ex. 3 | Com. Ex. 3 |
|---|---|---|
| Sponge dough        Flour | 7 kg | 7 kg |
| Instant yeast | 50 g | 50 g |
| Malt | 50 g | 50 g |
| Water | 4.34 kg | 4.34 kg |
| Kneading conditions | L 2 min. | H 1 min. |
| Kneading-up temperature | 24°C | 24°C |
| Primary fermentation | 4 hrs. | 4 hrs. |
| Main dough        Flour | 3 kg | 3 kg |
| Salt | 200 g | 200 g |
| Water | 1.86 kg | 1.86 kg |
| Kneading conditions | L 3 min. | H 6 min. |
| Kneading-up temperature | 28°C | 28°C |
| Floor time | 15 min. | |
| Division, molder | 220 g × 2 | |
| Bench time | 20 min. | |
| Final fermentation | Temperature 36°C, Humidity 90%, For 80 min. | |
| Baking | For 30 min. at 220°C | |

Physical properties of the obtained bread were measured. Results are shown in Table 3. As apparent from Table 3, the bread of Comparative Example 3 was of lesser volume and its aging was rapid, so it was inferior. On the contrary, the bread of Example 3 was soft, its aging was slow, it was of greater volume, and its crust was somewhat thick. It was nice-smelling, kept the taste of wheat, and was delicious with a lasting taste.

Table 3

| | | Ex. 3 | Com. Ex. 3 |
|---|---|---|---|
| Baking shrinkage | | 14.2% | 14.3% |
| Specific volume | | 4.95 | 3.99 |
| Crumb hardness (after baking) | 2 hrs. | 98 g | 150 g |
| | 24 hrs. | 178 g | 246 g |
| | 48 hrs. | 237 g | 358 g |
| | 72 hrs. | 379 g | 466 g |

Example 4 and Comparative Example 4

Flour was prepared by mixing 0.3 kg of GLIA-A with 9.7 kg of strong flour. This flour was divided into 8 kg and 2 kg to make a loaf of English bread by the sponge dough method under the following conditions. Another loaf of English bread was made in a similar manner with 10 kg of wheat flour (Comparative Example 4).

6

| Making conditions (70% sponge dough method) | | Ex. 4 | Com. Ex. 4 |
|---|---|---|---|
| Sponge dough | Flour | 8 kg | 8 kg |
| | Protein hydrolysate | 6 g | 6 g |
| | Malt | 50 g | 50 g |
| | Instant yeast | 50 g | 50 g |
| | Water | 5.44 kg | 5.44 kg |
| | Kneading conditions | L 2 min. | H 1 min. |
| | Kneading-up temperature | 24°C | 24°C |
| | Primary fermentation | 4 hrs. | 4 hrs. |
| Main dough | Flour | 2 kg | 2 kg |
| | Salt | 150 g | 150 g |
| | Water | 1.36 kg | 1.36 kg |
| | Kneading conditions | L 2 min. | H 5 min. |
| | Kneading-up temperature | 28°C | 28°C |
| | Floor time | 15 min. | |
| | Division, molder | 220 g × 2 | |
| | Bench time | 20 min. | |
| | Final fermentation | Temperature 36°C, Humidity 90%, For 80 min. | |
| | Baking | For 30 min. at 220°C | |

In this case, hydrolysate powder was used as the protein hydrolysate, in which gluten had been hydrolyzed and the quantity of amino acid was 30 wt.%.

Physical properties of the obtained bread were measured. Results are shown in Table 4. As apparent from Table 4, the bread of Comparative Example 4 was of lesser volume and its aging was rapid, so it was inferior. On the contrary, the bread of Example 4 was soft, its aging was slow, it was of greater volume, and its crust was thick. It was crisp, nice-smelling, kept the taste of wheat, and was delicious with a lasting salty taste.

Table 4

| | | Ex. 4 | Com. Ex. 4 |
|---|---|---|---|
| Baking shrinkage | | 15.2% | 15.6% |
| Specific volume | | 5.65 | 4.23 |
| Crumb hardness (after baking) | 2 hrs. | 120 g | 189 g |
| | 24 hrs. | 208 g | 316 g |
| | 48 hrs. | 289 g | 448 g |
| | 72 hrs. | 387 g | 576 g |

Example 5 and Comparative Example 5

7 kg of flour was prepared by mixing 0.2 kg of GLIA-A with 6.8 kg of strong flour to make a loaf of English bread by the sponge dough method under the following conditions. Another loaf of English bread was made in a similar manner with 10 kg of wheat flour and shortening (Comparative Example 5).

| Making conditions (70% sponge dough method) | | Ex. 5 | Com. Ex. 5 |
|---|---|---|---|
| Sponge dough | Flour | 7 kg | |
| | Strong flour | | 7 kg |

(continued)

| Making conditions (70% sponge dough method) | Ex. 5 | Com. Ex. 5 |
|---|---|---|
| Protein hydrolysate | 4 g | 0 g |
| Raw yeast | 200 g | 200 g |
| Water | 4.5 kg | 4.5 kg |
| Kneading conditions | L 2 min. | H 1 min. |
| Kneading-up temperature | 24°C | 24°C |
| Primary fermentation | 4 hrs. | 4 hrs. |
| Main dough Strong flour | 3 kg | 3 kg |
| Salt | 200 g | 200 g |
| Sugar | 500 g | 500 g |
| Water | 2.0 kg | 2.0 kg |
| Kneading conditions | L 3 min. | H 1 min. |
| Shortening | 0 g | 500 g |
| Kneading conditions | L 2 min. | H 5 min. |
| Kneading-up temperature | 28°C | 28°C |
| Floor time | 15 min. | |
| Division, molder | 220 g × 2 | |
| Bench time | 20 min. | |
| Final fermentation | Temperature 36°C, Humidity 90%, For 50 min. | |
| Baking | For 30 min. at 220°C | |

In this case, an extract of yeast containing amino acid of about 50 wt.% or more was used as the protein hydrolysate.

Physical properties of the obtained bread were measured. Results are shown in Table 5. As apparent from Table 5, the bread of Comparative Example 5 was a little lesser in volume and its aging was somewhat restrained but it lacked the taste of wheat essential to bread. The bread of Example 5 was soft, its aging was restrained, and it was of greater volume, in particular, kept the taste of wheat, and was delicious with lasting sweetness.

Table 5

| | | Ex. 5 | Com. Ex. 5 |
|---|---|---|---|
| Baking shrinkage | | 14% | 13.5% |
| Specific volume | | 5.20 | 4.92 |
| Crumb hardness (after baking) | 2 hrs. | 76 g | 81 g |
| | 24 hrs. | 142 g | 156 g |
| | 48 hrs. | 180 g | 238 g |
| | 72 hrs. | 232 g | 258 g |

## Claims

1. A process for making bread, comprising the steps of:

   a) mixing flour, yeast, optional additives, water, a gliadine-rich fraction in an amount of 0.5 to 15 wt% of the flour, and optional ingredients selected from sugar, salt and malt, without incorporation of other yeast food, shortening and emulsifier, and
   b) baking the dough,

wherein the gliadine-rich fraction contains at least 55 wt% gliadine in the protein and is an extract product of wheat gluten with an aqueous, acidic solution of ethanol or an aqueous acidic liquid.

2. A process as claimed in claim 1, in which a hydrolysate product of protein is further incorporated into the dough.

3. A process as claimed in claim 2, in which the hydrolysate product of protein is incorporated in an amount of 0.02 to 0.1 wt% based on the flour.

4. A process as claimed in claims 2 or 3, in which the hydrolysate product of protein includes 30 to 80 wt% of amino acids.

5. A process as claimed in claims 2 or 3, in which the hydrolysate product of protein includes at least 50 wt % of amino acids.

6. A process as claimed in any preceding claim, in which the gliadine-rich fraction is an extract product of wheat gluten with an aqueous acidic solution having a pH of 4.5 or below.

7. A process as claimed in any preceding claim, in which the gliadine-rich fraction contains at least 60 wt% gliadine.

8. A process as claimed in any preceding claim, in which the dough contains sugar and/or malt.

9. A process as claimed in any preceding claim, in which the dough is a lean preparation.

10. A process as claimed in any preceding claim, in which the gliadine-rich fraction is used in an amount of 1 to 15 wt% of the flour.

11. A process as claimed in claim 10, in which the gliadine-rich fraction is used in an amount of 2 to 15 wt% of the flour.

**Patentansprüche**

1. Verfahren zur Brotherstellung, umfassend die Schritte:

   a) Vermischen von Mehl, Hefe, optionalen Additiven, Wasser, einer Gliadin-reichen Fraktion in einer Menge von 0,5 bis 15 Gew.-% des Mehls und optionalen Ingredienzien, die aus Zucker, Salz und Malz ausgewählt sind, ohne Einarbeitung von anderen Hefelebensmitteln, Shortening und Emulgator und

   b) Backen des Teigs,

   wobei die Gliadin-reiche Fraktion mindestens 55 Gew.-% Gliadin im Protein enthält und ein Extraktprodukt von Weizengluten mit einer wäßrigen, sauren Ethanol-Lösung oder einer wäßrigen sauren Flüssigkeit ist.

2. Verfahren nach Anspruch 1, wobei außerdem ein Proteinhydrolysatprodukt in den Teig eingearbeitet wird.

3. Verfahren nach Anspruch 2, wobei das Proteinhydrolysatprodukt in einer Menge von 0,02 bis 0,1 Gew.-%, bezogen auf das Mehl, eingearbeitet wird.

4. Verfahren nach Anspruch 2 oder 3, wobei das Proteinhydrolysatprodukt 30 bis 80 Gew.-% Aminosäuren enthält.

5. Verfahren nach Anspruch 2 oder 3, wobei das Proteinhydrolysatprodukt mindestens 50 Gew.-% Aminosäuren umfaßt.

6. Verfahren nach einem vorangehenden Ansprüche, wobei die Gliadin-reiche Fraktion ein Extraktprodukt von Weizengluten mit einer wäßrigen sauren Lösung mit einem pH von 4,5 oder darunter ist.

7. Verfahren nach einem der vorangehenden Ansprüche, wobei die Gliadin-reiche Fraktion mindestens 60 Gew.-% Gliadin enthält.

**8.** Verfahren nach einem der vorangehenden Ansprüche, wobei der Teig Zucker und/oder Malz enthält.

**9.** Verfahren nach einem der vorangehenden Ansprüche, wobei der Teig eine magere Präparation ist.

**10.** Verfahren nach einem der vorangehenden Ansprüche, wobei die Gliadin-reiche Fraktion in einer Menge von 1 bis 10 Gew.-% des Mehls verwendet wird.

**11.** Verfahren nach Anspruch 10, wobei die Gliadin-reiche Fraktion in einer Menge von 2 bis 15 Gew.-% des Mehls verwendet wird.

**Revendications**

**1.** Procédé de fabrication du pain, comprenant les étapes consistant à :

a) mélanger la farine, la levure, les additifs facultatifs, l'eau, une fraction riche en gliadine en une quantité de 0,5 à 15 % en poids de la farine, et des ingrédients facultatifs sélectionnés parmi le sucre, le sel et le malt, sans incorporation d'autres aliments de la levure, matières grasses ou émulsifiants ; et
b) cuire la pâte au four ;

dans lequel la fraction riche en gliadine contient au moins 55 % en poids de gliadine dans la protéine et est un produit extrait du gluten de blé avec une solution acide aqueuse d'éthanol ou un liquide acide aqueux.

**2.** Procédé selon la revendication 1, dans lequel un produit d'hydrolysat de protéine est en outre incorporé dans la pâte.

**3.** Procédé selon la revendication 2, dans lequel le produit d'hydrolysat de protéine est incorporé en une quantité de 0,02 à 0,1 % en poids sur la base de la farine.

**4.** Procédé selon les revendications 2 ou 3, dans lequel le produit d'hydrolysat de protéine comprend de 30 à 80 % en poids d'acides aminés.

**5.** Procédé selon les revendications 2 ou 3, dans lequel le produit d'hydrolysat de protéine comprend au moins 50 % en poids d'acides aminés.

**6.** Procédé selon l'une quelconque des revendications précédentes, dans lequel la fraction riche en gliadine est un produit extrait du gluten de blé avec une solution acide aqueuse ayant un pH inférieur ou égal à 4,5.

**7.** Procédé selon l'une quelconque des revendications précédentes, dans lequel la fraction riche en gliadine contient au moins 60 % en poids de gliadine.

**8.** Procédé selon l'une quelconque des revendications précédentes, dans lequel la pâte contient du sucre et / ou du malte.

**9.** Procédé selon l'une quelconque des revendications précédentes, dans lequel la pâte est une préparation maigre.

**10.** Procédé selon l'une quelconque des revendications précédentes, dans lequel la fraction riche en gliadine est utilisée en une quantité de 1 à 15 % en poids de la farine.

**11.** Procédé selon la revendication 10, dans lequel la fraction riche en gliadine est utilisée en une quantité de 2 à 15 % en poids de la farine.